# EUROPÄISCHE PATENTANMELDUNG

(11) **EP 0 586 894 A2**
(43) Veröffentlichungstag der Anmeldung: **16.03.1994**
(21) Anmeldenummer: 93112673.4
(22) Anmeldetag: 07.08.1993
(51) Int. Cl.: G01M 3/32

(54) **Verfahren und Vorrichtung zum Prüfen der Dichtheit von gefüllten, mit einem angesiegelten oder aufgeschweissten Deckel oder dergleichen verschlossenen Behältern**

(30) Priorität: 10.09.1992 DE 4230025
(71) Anmelder: GASTI Verpackungsmaschinen GmbH, D-74523 Schwäbisch Hall (DE)
(72) Erfinder: Horlacher, Willy, D-74541 Vellberg (DE)
(74) Vertreter: Pfeiffer, Helmut, Dipl.-Ing.

(57) **Zusammenfassung**

Die Erfindung bezieht sich auf ein Verfahren und eine Vorrichtung zum Prüfen der Dichtheit von gefüllten, mit einem angesiegelten oder aufgeschweißten Deckel (17) oder dergleichen verschlossenen Behältern (6), die innerhalb einer Vakuumglocke (1) über eine im Bereich oberhalb des Deckels des Behälters einmündende Vakuumleitung (9) einem Vakuum ausgesetzt werden, wobei die Mündung der Vakuumleitung (9) bei dichtem Behälter durch den sich dann hochwölbenden Deckel automatisch verschlossen wird, während bei undichtem Behälter (16) die Mündung unverschlossen bleibt und daß in beiden Fällen der Differenzdruck zwischen dem sich im Innenraum der Vakuumglocke (1) eingestellten Druck un dem angelegten Unterdruck festgestellt wird. Mittels einer derartigen Prüfmethode bzw. einer solchen Vorrichtung wird eine absolut sichere Kontrolle der Dichtheit eines aufgesiegelten oder aufgeschweißten Deckels auf einen verschlossenen Behälter, insbesondere eines Kunststoffbechers, erreicht und zugleich die Möglichkeit einer universellen Einsetzbarkeit der Prüfvorrichtung gewährleistet.

## Beschreibung

Die Erfindung bezieht sich zunächst auf ein Verfahren zum Prüfen der Dichtheit von gefüllten, mit einem angesiegelten oder aufgeschweißten Deckel oder dergleichen verschlossenen Behältern, die innerhalb einer Vakuumglocke einem Unterdruck ausgesetzt werden, so daß bei dichtem Behälter der atmosphärische Druck im Innern des Behälters den Deckel hochwölbt, wobei durch die Hochwölbung des Deckels eine Anzeige über die Dichtheit des Behälters ausgelöst wird.

Es kommt vor, daß aufgrund von nicht korrekt sitzenden Deckeln, Füllguteinschlüssen in der Siegel- bzw. Schweißverbindung zwischen Deckel und Behälter oder in Folge fehlerhaft arbeitender Schweißvorrichtungen oder schließlich aufgrund von Beschädigungen des Deckels selbst, einige der gefüllten Behälter nicht luftdicht verschlossen sind, so daß deren Inhalt schnell verderben kann. Aber gerade bei Füllprodukten im Lebensmittelbereich, wie z. B. beim Abfüllen von Milchprodukten, wie Joghurt, Quarkspeisen usw. ist ein absoluter dichter Verschluß unbedingt notwendig, da andernfalls das eingefüllte Produkt sehr rasch ungenießbar wird.

Nach einem zum Überprüfen der Dichtheit von Kunststoffbechern mit aufgeschweißtem Deckel geeigneten Verfahren der eingangs genannten Art entsprechend der DE-OS 37 25 739 wird die Hochwölbung des Deckels oder dergleichen als Prüfkriterium dadurch ausgewertet, daß die Wölbung des Deckels elektronisch gemessen und über einen Rechner ausgewertet wird. Dies geschieht im einzelnen in der Weise, daß in der Unterdruckphase nach dem Hochwölben des Deckels ein Maximalmeßwert gebildet, digitalisiert und in einem Rechner vom Referenzwert subtrahiert wird und schließlich die Differenz mit einer spezifischen vorgewählten Größe verglichen wird. Die Spannungsänderung an einem berührungslos arbeitenden analogen Wegaufnehmer ermöglicht somit eine Aussage über den Zustand des Prüflings. Bei einem festgestellten undichten Becher wird dieser aus der Prüfeinrichtung herausgetaktet und hinter der Prüfvorrichtung aussortiert. Diese Prüfmethode bedarf in Folge der elektronischen Messung eines recht hohen technischen Aufwandes.

Aus der US-PS 4,934,180 ist eine Dichtheits-Prüfeinrichtung bekanntgeworden, bei der der Raum oberhalb des Deckels eines Behälters durch seitliche Dichtungen gegenüber einer mit der Schweiß- bzw. Siegelverbindung zwischen dem Deckel und dem Behälter verbundenen Druckkammer abgedichtet ist. In die ringförmige Druckkammer kann ein Druckmittel eingeleitet werden, so daß dieses durch eventuelle Öffnungen in der Schweißnaht zwischen Deckel und Behälter in das Innere des Behälters eindringt und dadurch den Deckel hochdrückt, bis dieser an einen Signalauslöser zur Anlage gelangt. Anstatt Preßdruck kann auch mit Unterdruck gearbeitet werden, so daß in diesem Fall der Deckel in seiner unteren Lage verbleibt, mithin kein Signal auslöst. Das bedeutet, daß dieser Behälter undicht ist und aussortiert werden muß. Diese Prüfvorrichtung hat den erheblichen Nachteil, daß die Abtastung auf mechanischem Wege erfolgt und insofern eine genaue Anpassung an die Formstabilität des Deckels notwendig ist. Außerdem kann nur eine Undichtigkeit in bezug auf die Siegel- bzw. Schweißnaht geprüft werden, nicht jedoch der Deckel selbst.

Aus der deutschen Offenlegungsschrift 37 18 600 ist schließlich ein Verfahren und eine Vorrichtung zum Feststellen des Dichtseins von gefüllten, mit einem angesiegelten oder aufgeschweißten Deckel oder dergleichen verschlossenen Behältern bekanntgeworden, bei dem die Behälter seitlich zusammengequetscht werden und somit am Deckel eine Bombage hervorgerufen und dabei die entstandende Höhendifferenz abgefragt wird. Zu diesem Zweck ist oberhalb des Deckels ein auf dessen Berührung reagierender Sensor vorgesehen. Abgesehen davon, daß je nach Beschaffenheit bzw. Formstabilität des Bechers und/oder des Deckels unterschiedliche Höhendifferenzen im Deckelbereich erzeugt werden, besteht auch die Gefahr, daß die Becher, je nach Werkstoffbeschaffenheit, zu wenig oder zu stark gequetscht werden. In der Praxis hat sich auf jeden Fall gezeigt, daß es bei derartigen Prüfvorrichtungen einer sehr häufigen Nachstellung des Sensors bedarf.

Aus der deutschen Patentschrift 35 28 248 sind schließlich ein Verfahren und eine Vorrichtung zum Kontrollieren der Dichtheit von gefüllten Behältern bekanntgeworden, bei dem das zwischen dem Deckel oder dergleichen und dem Füllgut des Behälters befindliche Luft- oder Gaspolster über den Deckel erwärmt und der Deckel durch vorübergehende mechanische Beaufschlagung in eine untere Ausgangslage gedrückt und die Deckellage abgetastet und schließlich das Abtastergebnis zum Anzeigen sowie gegebenenfalls Aussortieren fehlender bzw. fehlerhafter Deckel oder dergleichen ausgenutzt wird. Diese Vorrichtung arbeitet an sich zufriedenstellend, sie erfordert jedoch eine genaue Anpassung an die verwendeten Deckel. Auch darf durch den Heizkopf ein auf dem Deckel aufgebrachtes Druckbild nicht zerstört werden und bei unterschiedlichen Werkstoffen für den Deckel muß eine möglichst gleichbleibende Wärmeleitfähigkeit garantiert sein.

Der Erfindung liegt die Aufgabe zugrunde, ein Verfahren vorzuschlagen, durch das mit besonders einfachen Mitteln eine absolut sichere Kontrolle der Dichtheit eines durch eine aufgesiegelten oder aufgeschweißten Deckel oder dergleichen verschlossenen Behälters, insbesondere eines Kunststoffbechers, erreicht wird. Ferner soll diese Dichtheitskontrolle mit Hilfe einer unabhängig von der Formstabilität des Deckels universell einsetzbaren Vorrichtung ermöglicht werden.

Diese Aufgabe wird in verfahrensmäßiger Hinsicht dadurch erreicht, daß der Innenraum der Vakuumglocke über eine im Bereich oberhalb des Deckels des Behälters einmündende Vakuumleitung solange evakuiert wird, bis deren Mündung bei dichtem Behälter durch den sich dann hochwölbenden Deckel automatisch verschlossen wird, während bei undichtem Behälter die Mündung der Vakuumleitung unverschlossen bleibt und daß in beiden Fällen der Differenzdruck zwischen dem sich im Innenraum der Vakuumglocke eingestellten Druck und dem angelegten Druck festgestellt wird.

Mit den Mitteln nach der Erfindung können weitgehend alle Deckel unabhängig von ihrer Wärmeleitfähigkeit und ihrer Formstabilität auf Dichtheit geprüft werden. Eine unerwünschte thermische Belastung auf den Deckel ist nicht vorhanden. Dieser kann einer hohen Bombage ausgesetzt werden. Man kommt somit zu einem sicheren Meßergebnis. Das erfindungsgemäße Verfahren kann auch bei Heißabfüllung der Behälter eingesetzt werden, da eine zusätzliche Beheizung des Deckels zur Erzeugung einer Bombage nicht erforderlich ist. Schließlich kann eine Farbcodierung bzw. das Aufbringen eines Verfallsdatums vor der Behälterdichtheitskontrolle auf den Deckel aufgebracht werden. Dadurch wird einerseits eine Zerstörung des Druckbildes vermieden, andererseits jedoch durch einen Farb- bzw. Druckstempel im Deckel hervorgerufene Undichtigkeiten festgestellt.

Die erfindungsgemäße Differenzdruckmessung kann entweder als Einzelabfrage für jeweils einen Behälter oder aber auch als Mehrfachabfrage gleichzeitig für mehrere innerhalb der Vakuumglocke angeordnete Behälter durchgeführt werden. Dabei kann die Prüfung innerhalb einer Behälterfüll- und Verschließmaschine durchgeführt werden oder aber auch hinter der Behälterfüll- und Verschließmaschine, z. B. nach dem Einbringen der Behälter in einen Umkarton oder dergleichen.

Eine zum Prüfen der Dichtheit von gefüllten, mit einem angesiegelten oder angeschweißten Deckel oder dergleichen verschlossenen Behältern mit einer über eine Vakuumleitung mit einer Vakuumpumpe in Verbindung stehenden Vakuumglocke zur Aufnahme des oder der Behälter sowie einer Anzeigeeinrichtung zum Erkennen von dichten und undichten Behältern geeignete Vorrichtung ist erfindungsgemäß dadurch gekennzeichnet, daß in einem voreinstellbaren Abstand oberhalb des Deckels oder dergleichen jedes Behälters ein an die Vakuumleitung angeschlossener und bei hochgewölbtem Deckel oder dergleichen durch diesen verschließbarer Mündungskörper angeordnet ist und daß der Innenraum der Vakuumglocke über eine Meßleitung mit der einen Seite eines Differenzdruckmeßgerätes verbunden ist, dessen andere Seite über eine Zweigleitung mit der Vakuumleitung der Vakuumpumpe in Verbindung steht.

Eine derartige Prüfvorrichtung zeichnet sich durch eine besonders einfache Bauweise und eine universelle Einsetzbarkeit aus, da durch den automatischen Verschluß des Mündungskörpers eine leichte Anpassung an unterschiedlich beschaffene Deckel ohne weiteres möglich ist.

Es hat sich als zweckmäßig erwiesen, den Mündungskörper als Saugnapf auszubilden und diesen im wesentlichen zentrisch zum Deckel oder dergleichen eines jeden Behälters anzuordnen.

Jeder Saugnapf kann am unteren Ende eines Saugrohrs angeordnet sein, das jeweils ein Teil der gemeinsamen, zur Vakuumpumpe führenden Vakuumleitung bildet.

Zur Anpassung an unterschiedlich hohe Behälter und/oder hinsichtlich ihrer Formstabilität unterschiedliche Deckel kann der Abstand zwischen der Unterkante des Saugnapfes und der Oberseite des Deckels oder dergleichen jedes Behälters einstellbar ausgebildet sein. Dies wird zum Beispiel in einfacher Weise dadurch erreicht, daß das Saugrohr jeweils in einem innerhalb der Vakuumglocke dichtend geführten und höhenverstellbar gelagerten Deckel eingesetzt ist.

Durch die Wölbung bzw. bei undichtem Behälter Nichtwölbung kann bei entsprechend festgestelltem Differenzdruck der jeweils undichte Behälter leicht erkannt werden. Zu diesem Zweck ist die Umfangswandung der Vakuumglocke zumindest teilweise durchsichtig, vorzugsweise als Glaszylinder oder dergleichen ausgebildet.

Um die Sicherheit der Messung bezüglich kleinster Leckagen bei schnellem Evakuieren wesentlich zu verbessern, ist an die Vakuumglocke eine über ein Dreiwegeventil mit der Vakuumleitung verbundene Bypaßleitung angeschlossen und oberhalb des Deckels des Behälters eine vorübergehend als Niederhalter wirkende, federnd abgestützte Ringbuchse vorgesehen, die über eine Hubeinrichtung, z.B. einen Pneumatilkzylinder liftbar ist.

Wenn die Vakuumglocke Teil einer in eine Behälterfüll- und Verschließmaschine integrierten Differenzdruck-Kontrollmeßeinrichtung ausgebildet ist, empfiehlt es sich, die Vakuumglocke geteilt auszubilden und den einen Verschlußteil mit Saugrohr und Differenzdruckmeßgerät auf der einen Seite eines Behälter aufnehmenden Transporteurs und den anderen Verschlußteil auf der anderen Seite des Transporteurs anzuordnen. Auf diese Weise wird die Möglichkeit geschaffen, die Verschlußteile im wesentlichen vertikal zur Bewegungsrichtung des Transporteurs in eine Schließ- und Öffnungsstellung verstellbar zu machen, so daß die Kontrollprüfung auf Dichtheit der Behälter während des Behälterdurchlaufs durch eine Behälterfüll- und Verschließmaschine auf einfachste Weise durchgeführt werden kann.

Bevorzugte Ausführungsbeispiele der Erfindung sind in der Zeichnung dargestellt und werden im folgenden näher erläutert. Es zeigen:
- Fig. 1: eine schematische Darstellung einer Dichtheits-Prüfeinrichtung mit der erfindungsgemäßen Differenzdruckmessung bei einem dichten Behälter,
- Fig. 2: eine entsprechende Darstellung bei undichtem Behälter,
- Fig. 3: eine Anordnung mit einer Einzelabfrage für jeweils einen Behälter in einer Vakuumglocke,
- Fig. 4: eine entsprechende Anordnung für eine Mehrfachabfrage bei mehreren zu überprüfenden Behältern innerhalb einer Vakuumglocke,
- Fig. 4a und 4b: eine abgewandelte Ausführungsform der in Fig. 4 dargestellten Anordnung,
- Fig. 5: eine Prüfeinrichtung mit in einem Karton oder auf einem Tray angeordneten Behältern,
- Fig. 6: die Prüfeinrichtung nach der Differenzdruckmessung mit zwei dichten Behältern,
- Fig. 7: eine entsprechende Darstellung mit einem dichten und einem undichten Behälter,
- Fig. 8: eine schematische Darstellung der Dichtheits-Prüfeinrichtung innerhalb einer Becherfüll- und Verschließmaschine.

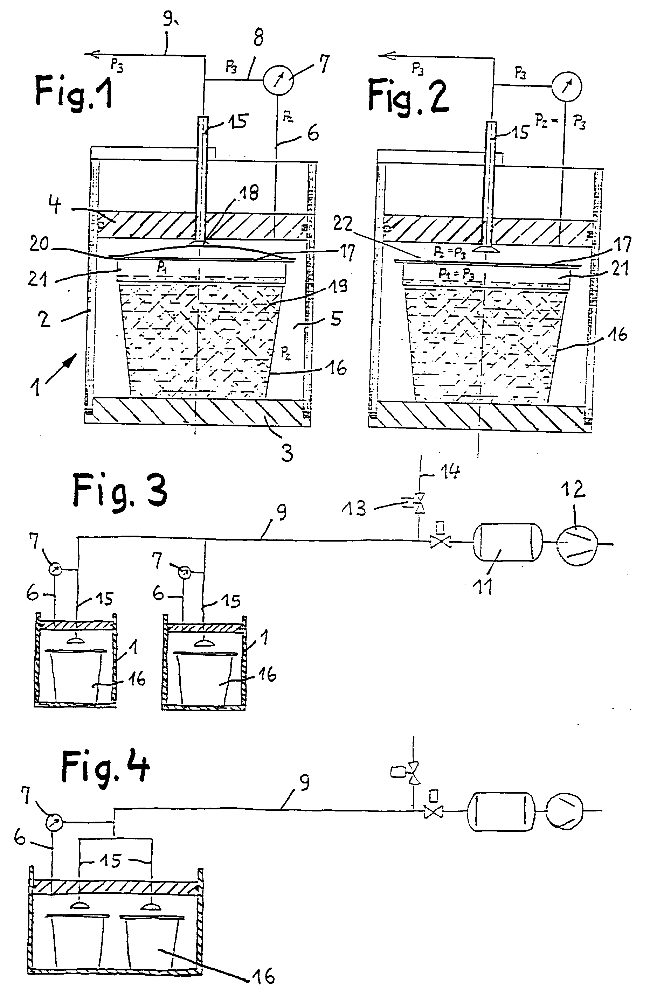

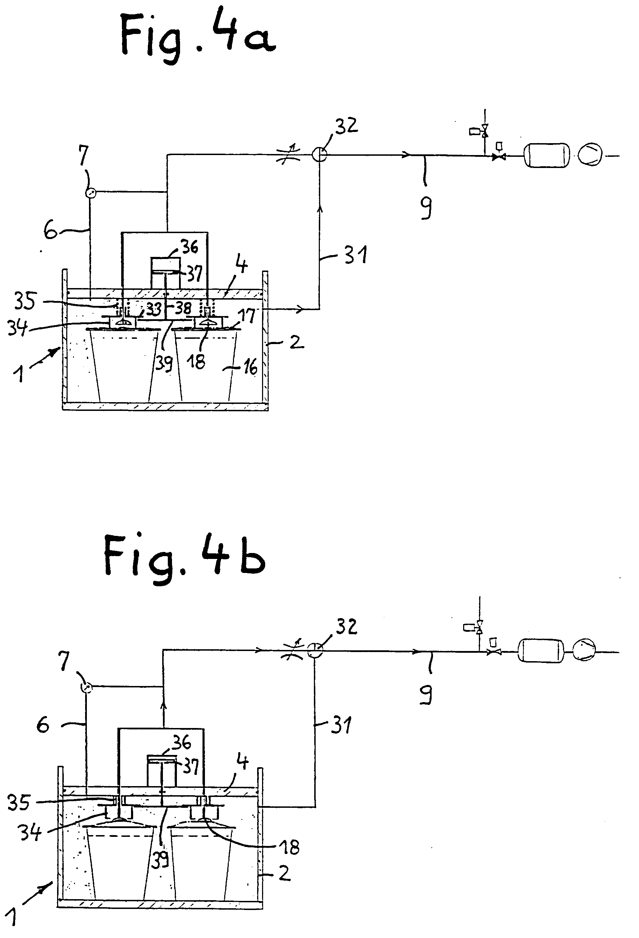

Eine in Fig. 1 dargestellte Dichtheits-Prüfeinrichtung weist eine Vakuumglocke 1 auf, die im wesentlichen aus einer durchsichtigen, beispielsweise als Glaszylinder ausgebildeten Wandung 2, einem damit dicht verbundenen Boden 3 und einer innerhalb des Zylinders dichtend geführten und höhenverstellbaren Deckelplatte 4 besteht. Der zwischen dem Boden 3 und der Deckelplatte 4 befindliche Innenraum 5 der Vakuumglocke 1 steht über eine Meßleitung 6 mit der einen Seite eines Differenzdruckmeßgeräts 7 in Verbindung, das auf seiner anderen Seite über eine Zweigleitung 8 mit einer Vakuumleitung 9 verbunden ist, die ihrerseits über einen in den Fig. 3 und 4 dargestellten Vakuumspeicher 11 mit einer Vakuumpumpe 12 verbunden ist. Von der Vakuumleitung 9 geht eine durch ein Ventil 13 gesteuerte Belüftungsleitung 14 ab. Im Bereich der Vakuumglocke 1 geht die Vakuumleitung 9 in ein Saugrohr 15 über (Fig. 1 und 2), welches im wesentlichen zentrisch zu einem innerhalb des Innenraums 5 der Vakuumglocke 1 angeordneten auf Dichtheit zu überprüfenden Behälter 16 liegt, der beispielsweise als Kunststoffbecher ausgebildet ist. Der Behälter 16 ist durch einen beispielsweise aus Aluminiumfolie bestehenden Deckel 17 verschließbar. An dem dem Deckel 17 des Behälters 16 zugewandten Ende besitzt das Saugrohr 15 einen Mündungskörper 18, der im dargestellten Ausführungsbeispiel als Saugnapf ausgebildet ist. Die Unterkante des Saugnapfes 18 ist zu der Oberseite des Deckels 17 oder dergleichen des Behälters 16 in seiner Höhe einstellbar ausgebildet. Oberhalb des Füllgutes 19 des Behälters 16 bis zur Unterseite des Deckels 17 befindet sich ein luftgefüllter Kopfraum 21, in dem normalerweise, d. h. bei dichtem Behälter atmosphärischer Druck P1 herrscht. Die zu überprüfenden Undichtigkeiten des Behälters 16 sind auf schlecht sitzende Deckel, Füllguteinschlüsse in der Siegel- oder Schweißnaht zwischen Deckel und Behälter oder auf fehlerhaft arbeitende Schweißvorrichtungen oder schließlich auf undichte Stellen im Deckel selbst zurückzuführen.

Die erfindungsgemäße Vorrichtung arbeitet wie folgt:
Beim Evakuieren der Vakuumglocke 1 über die Vakuumleitung 9 drückt der atmosphärische Druck P1 innerhalb des Kopfraums 21 des Behälters 16 gegen den Deckel 17, sofern dieser selbst dicht ist bzw. die Schweiß- und Siegelnaht 20 mit dem Behälter dicht ist. Die dabei entstandene Wölbung (Bombage) des Deckels 17 berührt nach einer relativ kurzen Zeit den im Abstand zum Deckel angeordten Saugnapf 18 des Saugrohrs 15. Durch diese Berührung "saugt" sich der Saugnapf 18 am Deckel 17 fest und verhindert somit ein weiteres Evakuieren des Innenraums 5 der Vakuumglocke 1. Es stellt sich daher innerhalb des Innenraums 5 der Vakuumglocke ein bestimmter Druck P2 ein. Dieser Druck P2 wird über die Meßleitung 6 dem Differenzdruckmeßgerät 7 zugeführt und in diesem mit dem über die Zweigleitung 8 zugeleiteten Unterdruck P3, der auch in der Saugleitung 9 und damit im Saugrohr 15 herrscht, verglichen, so daß am Differenzdruckmeßgerät 7 ein bestimmter Differenzdruck P2 minus P3 angezeigt wird. Daraus ergibt sich, daß der überprüfte Behälter dicht verschlossen ist.

Sofern ein Behälter undicht ist, sei es, daß der Deckel selbst Durchtrittsöffnungen aufweist oder aber seine Siegel- und Schweißnaht mit dem Behälter undicht ist, so ergibt sich folgende Situation:
Beim Evakuieren der Vakuumglocke 1 strömt die im Kopfraum 21 des Behälters 16 enthaltene Luft über die undichte Stelle, z. B. 22 in den Innenraum 5 der Vakuumglocke. Von dort wird die im Innenraum 5 der Vakuumglocke 1 vorhandenen Luft über das Saugrohr 15 evakuiert. Die aus dem Kopfraum 21 des Behälters ausströmende Luft kann somit beim Deckel 17, der eine gewisse Eigenspannung aufweist, keine Wölbung bzw. Bombage erzeugen. Ohne eine solche Wölbung ist jedoch am Saugnapf kein Verschließen der Mündung des Saugrohrs möglich und demzufolge entsteht kein Differenzdruck. Das bedeutet, der Druck P1 im Kopfraum 21 und ebenso der Druck P2 im Innenraum 5 des Behälters dem angelegten Unterdruck P3 entsprechen. Daraus folgt, daß der Behälter nicht dicht verschlossen ist.

In Fig. 3 ist der Einsatz der erfindungsgemäßen Prüfeinrichtung nach der Differenzdruckmethode für eine Einzelabfrage dargestellt, d. h. jeweils ein Behälter 16 ist in einer separaten Vakuumglocke angeordnet. Jeder Vakuumglocke sind dabei ein Saugrohr 15 und eine Meßleitung 6 mit Differenzdruckmeßgerät 7 zugeordnet. Die Saugleitungen gehen dann in die gemeinsame Unterdruckleitung 9 über. Im Gegensatz dazu ist in Fig. 4 eine Mehrfachabfrage schematisch dargestellt, bei der innerhalb einer Vakuumglocke mehrere Behälter 16 nebeneinander angeordnet sind. Die beiden Saugrohre 15 sind dabei wiederum an die gemeinsame Vakuumleitung angeschlossen, in diesem Fall ist nur eine Meßleitung 6 mit einem Differenzdruckmeßgerät 7 vorhanden. Eine derartige Einrichtung ist einfach und preisgünstig, da nur eine Kontrolleinrichtung benötigt wird. Die Behälter können dabei auf engstem Raum stehen.

In den Fig. 4a und b ist eine abgewandelte Anordnung für eine Mehrfachabfrage dargestellt.

An die Wandung 2 der Vakuumglocke 1 ist eine Bypaßleitung 31 angeschlossen, die über ein Dreiwegeventil 32 mit der Vakuumleitung 9 verbunden ist. Innerhalb der Vakuumglocke 1 ist oberhalb des Deckels 17 jedes Behälters 16 eine mit einem Kragen 33 versehene Ringbuchse 34 angeordnet, die durch eine Druckfeder 35 an der Unterseite der Deckelplatte 4 abgestützt ist. Auf deren Oberseite ist ein Pneumatik-Zylinder 36 angeordnet, dessen Kolben 37 über eine Kolbentange 38 mit einer unter den Kragen 33 der Ringbuchsen 34 greifenden Hubplatte 39 verbunden ist.

In einer ersten Phase des Evakuiervorganges wird über die Bypaßleitung 31 der größte Teil des zu evakuierenden Volumens abgesaugt. Die auf dem Deckel 17 federnd aufliegende Ringbuchse 34 verhindert, daß der Deckel 17 selbst bei kleinsten Leckagen bombiert, obgleich über die Bypaßleitung 31 schnell evakuiert wird.

In einer zweiten Phase werden das Dreiwegeventil 32 und der Pneumatik-Zylinder 36 geschaltet; d.h. die Bypaßleitung 31 ist nun gesperrt, die Ringbuchse 34 ist angeliftet und gibt den Saugnapf 18 frei. Der letzte Rest des zu evakuierenden Volumens wird über die Saugnäpfe 18 abgesaugt. Ist der Behälter 16 dicht, wird der Deckel 17 das Anliften der Ringbuchse 34 durch die Bombage unterstützen und es wird sich ein Differenzdruck einstellen.

Ist der Behälter nicht dicht, wird das verbleibende Restvolumen über die Saugnäpfe abgesaugt. Dieser Rest ist aber nicht in der Lage, eine Bombage zu bilden, d.h. es stellt sich kein Differenzdruck ein.

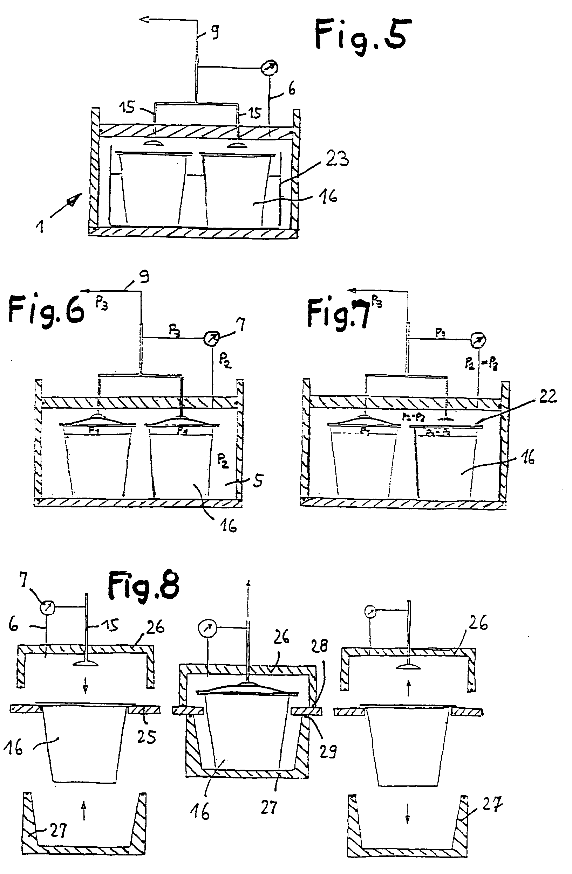

Eine Mehrfachabfrage eignet sich besonders gut bei der Anordnung der Prüfstelle nach einem Einpacker, da z. B., wie aus Fig. 5 ersichtlich, mehrere Behälter 16 in einem Umkarton 23, einem Tray oder dergleichen eingesetzt und durch diese gemeinsame Prüfeinrichtung auf Dichtheit überprüft werden können.

Die Überprüfung mehrerer Behälter mit einer einzigen Prüfeinrichtung ist im einzelnen in den Fig. 6 und 7 dargestellt. Fig. 6 zeigt ein Beispiel, bei dem zwei nebeneinander stehende Behälter dicht sind. In diesem Fall werden nach dem Evakuieren des Innenraums 5 die beiden Deckel 17 der Behälter an die Unterseite des Saugnapfes 18 angesaugt. Somit ergibt sich am Differenzdruckmeßgerät ein Differenzdruck, der anzeigt, daß keiner der Behälter undicht ist.

Im Falle der Fig. 7 ist der links dargestellte Behälter dicht, während der rechts dargestellte Behälter 16 undicht ist. In diesem Fall ist der Differenzdruck gleich Null. Das bedeutet, mindestens ein Behälter aller überprüften Behälter innerhalb der Vakuumglocke ist undicht. Dieser undichte Behälter kann z. B. durch die durchsichtige Vakuumglocke leicht erkannt und aussortiert werden.

Grundsätzlich ist es auch möglich und unter Umständen vorteilhaft, die Prüfeinrichtung in eine Behälterfüll- und Verschließmaschine zu integrieren. Eine solche Anordnung ist in Fig. 8 dargestellt. In diesem Fall werden die gegebenenfalls in mehreren nebeneinanderliegenden Bahnreihen angeordneten Behälter entsprechend der Pfeilangabe 24 durch die im einzelnen nicht dargestellte Behälterfüll- und Verschließmaschine geführt. Dabei werden die Behälter 16 von einem Transporteur 25 aufgenommen, der schrittweise durch die Maschine geführt wird. Bei dieser Prüfmethode ist die Vakuumglocke zweiteilig ausgebildet. Sie besteht aus einem auf der einen Seite des Transporteurs gelegenen Verschlußteil 26 mit Saugrohr 15, Meßleitung 6 und Differenzdruckmeßgerät 7 und einem auf der anderen Seite gelegenen Verschlußteil 27. Die Verschlußteile 26, 27 können im wesentlichen vertikal zur Bewegungsrichtung des Transporteurs 25 in eine Schließ- und Öffnungsstellung gebracht werden. In der Schließstellung, so wie sie in der mittleren Abbildung der Fig. 8 dargestellt ist, liegen die Verschlußteile 26, 27 jeweils über eine Dichtung 28, 29 am Transporteur an. Nach dem Überprüfen werden die Verschlußteile wieder in ihre Öffnungsstellung verstellt.

Es versteht sich, daß die Erfindung nicht nur auf die dargestellten Ausführungsbeispiele beschränkt ist, sondern im Rahmen der Ansprüche auch Abänderungen zuläßt. So könnte grundsätzlich die Vakuumglocke mit dem Transporteur synchron mitlaufen und diesen auf einer bestimmten Wegstrecke begleiten, um nach abgeschlossenem Prüfvorgang in die Ausgangsposition zur Übernahme einer neuen Becherreihe zurückzufahren.

## Patentansprüche

1. Verfahren zum Prüfen der Dichtheit von gefüllten, mit einem angesiegelten oder aufgeschweißten Deckel (17) oder dergleichen verschlossenen Behältern (16), die innerhalb einer Vakuumglocke (1) einem Unterdruck ausgesetzt werden, so daß bei dichtem Behälter (16) der atmosphärische Druck (P1) im Kopfraum (21) des Behälters den Deckel (17) hochwölbt, wobei durch die Hochwölbung des Deckels eine Anzeige über die Dichtheit des Behälters (16) ausgelöst wird, **dadurch gekennzeichnet**, daß der Innenraum (5) der Vakuumglocke (1) über eine im Bereich oberhalb des Deckels (17) des Behälters (16) einmündende Vakuumleitung (9, 15) solange evakuiert wird, bis deren Mündung bei dichtem Behälter (16) durch den sich hochwölbenden Deckel (17) automatisch verschlossen wird, während bei undichtem Behälter (16) die Mündung der Vakuumleitung (9, 15) unverschlossen bleibt und daß in beiden Fällen der Differenzdruck zwischen dem sich im Innenraum (5) der Vakuumglocke (1) eingestellten Druck (P2) und dem angelegten Druck (P3) festgestellt wird.

2. Verfahren nach Anspruch 1, **dadurch gekennzeichnet,**
daß die Differenzdruckmessung jeweils als Einzelabfrage für einen einzigen Behälter (16) durchgeführt wird.

3. Verfahren nach Anspruch 1, **dadurch gekennzeichnet**,
daß die Differenzdruckmessung als Mehrfachabfrage gleichzeitig für mehrere innerhalb der Vakuumglocke (1) angeordnete Behälter (16) durchgeführt wird.

4. Verfahren nach Anspruch 3, **dadurch gekennzeichnet**,
daß die gemeinsame Differenzdruckmessung nach dem Einbringen der Behälter (16) in einen Umkarton (23), ein Tray oder dergleichen erfolgt.

5. Vorrichtung zum Prüfen der Dichtheit von gefüllten, mit einem angesiegelten oder angeschweißten Deckel (17) oder dergleichen verschlossenen Behältern (16) mit einer über eine Vakuumleitung (9, 15) mit einer Vakuumpumpe (12) in Verbindung stehenden Vakuumglocke (1) zur Aufnahme des oder der Behälter (16) sowie einer Anzeigeeinrichtung zum Erkennen von dichten und undichten Behältern, zur Durchführung des Verfahrens nach einem oder mehreren der Ansprüche 1 bis 4, **dadurch gekennzeichnet**, daß in einem voreinstellbaren Abstand oberhalb des Deckels (17) oder dergleichen jedes Behälters (16) ein an die Vakuumleitung (9, 15) angeschlossener und bei hochgewölbtem Deckel (17) oder dergleichen durch diesen verschließbarer Mündungskörper (18) angeordnet ist und daß der Innenraum (5) der Vakuumglocke (1) über eine Meßleitung (6) mit der einen Seite eines Differenzdruckmeßgerätes (7) verbunden ist, dessen andere Seite über eine Zweigleitung (8) mit der Vakuumleitung (9) der Vakuumpumpe (12) in Verbindung steht.

6. Vorrichtung nach Anspruch 5, **dadurch gekennzeichnet**,
daß der Mündungskörper als Saugnapf (18) ausgebildet ist.

7. Vorrichtung nach Anspruch 5 oder 6, **dadurch gekennzeichnet**, daß der Saugnapf (18) im wesentlichen zentrisch zum Deckel (17) oder dergleichen eines jeden Behälters (16) angeordnet ist.

8. Vorrichtung nach einem oder mehreren der Ansprüche 5 bis 7, **dadurch gekennzeichnet**, daß der Saugnapf (18) am unteren Ende eines Saugrohrs (15) angeordnet ist, das ein Teil der Vakuumleitung (9) bildet.

9. Vorrichtung nach einem oder mehreren der Ansprüche 5 bis 8, **dadurch gekennzeichnet**, daß der Abstand zwischen der Unterkante des Saugnapfes (18) und der Oberseites des Deckels (17) oder dergleichen eines jeden Behälters (16) einstellbar ausgebildet ist.

10. Vorrichtung nach einem oder mehreren der Ansprüche 5 bis 9, **dadurch gekennzeichnet**, daß das Saugrohr (15) in einer innerhalb der Vakuumglocke (1) dichtend geführten und höhenverstellbar gelagerten Deckelplatte (4) gelagert ist.

11. Vorrichtung nach einem oder mehreren der Ansprüche 5 bis 10, **dadurch gekennzeichnet**, daß die Umfangswandung (2) der Vakuumglocke (1) zumindest teilweise durchsichtig, vorzugsweise als Glaszylinder oder dergleichen ausgebildet ist.

12. Vorrichtung nach einem oder mehreren der Ansprüche 5 bis 11, **dadurch gekennzeichnet**, daß die Vakuumglocke (1) als Teil einer in eine Behälterfüll- und Verschließmaschine integrierten Differenzdruck-Kontrollmeßeinrichtung ausgebildet ist.

13. Vorrichtung nach Anspruch 12, **dadurch gekennzeichnet**,
daß die Vakuumglocke (1) geteilt ausgebildet ist und einen auf der einen Seite eines Behälter (16) aufnehmenden Transporteurs (25) liegenden Verschlußteil (26) mit Saugrohr (15) und Differenzdruckmeßgerät (7) und einen auf der anderen Seite des Transporteurs (25) gelegenen Verschlußteil (27) aufweist.

14. Vorrichtung nach einem oder mehreren der Ansprüche 5 bis 13, **dadurch gekennzeichnet**, daß die Verschlußteile (26, 27) im wesentlichen vertikal zur Bewegungsrichtung (24) des Transporteurs (25) in eine Schließ- und Öffnungsstellung verstellbar ausgebildet sind.

15. Vorrichtung nach einem oder mehreren der Ansprüche 5 bis 14, **dadurch gekennzeichnet**, daß an die Vakuumglocke (1) eine über ein Dreiwegeventil (32) mit der Vakuumleitung (9) verbundene Bypaßleitung (31) angeschlossen und oberhalb des Deckels (17) des Behälters (16) eine vorübergehend als Niederhalter wirkende, federnd abgestützte Ringbuchse (34) vorgesehen ist, die über eine Hubeinrichtung, z.B. einen Pneumatik-Zylinder (36) liftbar ist.
